# FASCICULE DE BREVET EUROPEEN

(11) **EP 2 117 859 B1**
(45) Date de publication et mention de la délivrance du brevet: **08.12.2010**
(21) Numéro de dépôt: 08762004.3
(22) Date de dépôt: 30.01.2008
(51) Int. Cl.: B60H 1/32

(54) **PROCEDE DE REGULATION DU CONFORT THERMIQUE POUR UN VEHICULE A ARRET ET DEPART DU MOTEUR**
VERFAHREN ZUR EINSTELLUNG DES WÄRMEKOMFORTS IN EINEM FAHRZEUG NACH ANHALTEN UND STARTEN DES MOTORS
METHOD FOR ADJUSTING THERMAL COMFORT IN A VEHICLE UPON STOPPING AND STARTING THE ENGINE

(30) Priorité: 16.02.2007 FR 0753294
(43) Date de publication de la demande: 18.11.2009
(73) Titulaire: Renault SAS, 92100 Boulogne Billancourt (FR)
(72) Inventeur: GIBERT, Joan, F-92290 Chatenay Malabry (FR); BRAUNSCHWEIG, Vincent, F-92260 Fontenay aux Roses (FR); COUETOUX, Hervé, F-91470 Les Molieres (FR); COFFIN, Florent, F-27490 Ecardenville sur Eure (FR)
(86) Numéro de dépôt international: PCT/FR2008/050144
(87) Numéro de publication internationale: WO 2008/104661

(56) Documents cités:
- EP-A- 1 571 022
- JP-A- 2000 179 374
- US-A- 6 073 456
- US-A1- 2003 051 495

## Description

### DOMAINE TECHNIQUE

Dans un véhicule traditionnel, le moteur reste en fonctionnement pendant toute la durée du trajet, que le véhicule roule ou qu'il soit à l'arrêt, par exemple à un feu rouge. La prestation de confort thermique est donc assurée par des moyens connus tels que les boucles chaude et froide.

Dans un véhicule équipé de la fonction d'arrêt et de départ du moteur, le moteur se coupe lorsque la vitesse est nulle ou quasi nulle. La plupart des prestations du véhicule sont coupées ou dégradées. Or, il est important, voire indispensable de continuer de proposer certaines de ces prestations, par exemple le désembuage du pare-brise. Le document US 2003/0051495, qui est considéré comme l'art antérieur le plus proche, décrit un procédé de régulation du confort thermique pour un véhicule à arrêt et départ du moteur, dans lequel le temps de coupure du moteur est limité en fonction de conditions prédéfinies.

Une solution pour maintenir le confort thermique pendant l'arrêt du moteur du véhicule est de mettre des systèmes additionnels de climatisation-chauffage qui vont d'un simple évaporateur à stockage de frigories à des solutions plus complexes comme un compresseur électrique alimenté par des batteries. Toutefois ces solutions sont coûteuses.

La présente invention a pour objet un procédé de régulation du confort thermique pour un véhicule à arrêt et départ (parfois appelé Stop&Start) du moteur qui ne nécessite pas d'ajouter du matériel de climatisation-chauffage additionnel.

Ces buts sont atteints conformément à l'invention par le fait que l'on définit des conditions principales relatives notamment à la température d'eau du moteur, à la température à l'intérieur de l'habitacle du véhicule, au risque d'embuage du pare-brise, au risque d'odeurs dans l'évaporateur du circuit de climatisation, que l'on limite le temps de coupure du moteur en fonction de ces conditions, que l'on redémarre le moteur aussitôt que l'écart entre la température dans l'habitacle et une température cible sort d'un intervalle [-a;+a], et que l'intervalle [-a;+a] varie dynamiquement en fonction des conditions extérieures, l'intervalle étant élargi lors d'un démarrage du véhicule et resserré en conditions stabilisées.

Avantageusement, d'une part on limite le temps de coupure du moteur par un redémarrage du moteur et d'autre part on réduit l'occurrence des stops (durée et nombre) par une interdiction d'arrêt du moteur pendant le roulage. Ces deux actions sont générées dans l'automatisme de supervision de la fonction d'arrêt et de départ.

Selon une première condition relative à la température de l'eau de refroidissement du moteur, utilisée préférentiellement par temps froid, on interdit la coupure du moteur tant que la mesure de la température de l'eau de refroidissement du moteur est inférieure à une valeur de seuil S1 (S1 compris entre 50°C et 60°C).

Le calculateur de climatisation a accès à la mesure de la température de l'eau du moteur et la condition intervient à chaque coupure du moteur pour déterminer le temps de coupure. Si la condition n'est plus remplie au cours de la coupure le moteur redémarre.

Avantageusement, l'écart de température dans l'habitacle entre la température cible et la température mesurée est maintenu dans l'intervalle [-a ; +a] avec a compromis entre 1°C et 5°C. Cette valeur sera fonction du compromis confort/écononomie carburant/antipollution. Un ordre de grandeur raisonnable essayé se situe entre 1°C et 5°C.

Cette condition est fondamentale car elle détermine le confort thermique dans l'habitacle. Le compromis entre prestation de confort thermique et arrêt et départ du moteur dépend de l'intervalle de tolérance que l'on consent pour le paramètre de l'erreur de confort. Si cet intervalle est important on concède une dégradation du confort importante, sinon on accepte de réaliser moins de coupure du moteur ou de les écourter.

Selon une troisième condition relative au risque d'embuage du pare-brise, si le véhicule possède un capteur d'hygrométrie, on mesure le degré hygrométrique de l'air de l'habitacle du véhicule automobile au moyen du capteur d'hygrométrie et l'on redémarre le moteur lorsque le capteur d'hygrométrie détecte un risque d'embuage du pare-brise.

Si le véhicule est dépourvu d'un capteur d'hygrométrie, le conducteur provoque le redémarrage du moteur du véhicule en appuyant sur la touche de commande de désembuage rapide lorsqu'un embuage du pare-brise est constaté. Une deuxième activation, dans une durée prédéterminée en cas de risque d'embuage persistant interdit la coupure du moteur pendant une durée déterminée. Dans un mode de réalisation, l'utilisateur a un recours ultime pour redémarrer avec l'appui sur un bouton d'hinhibition du mode stop/start.

Enfin, selon une quatrième condition relative au risque de mauvaises odeurs, par la mesure de la température de l'évaporateur du circuit de climatisation au moyen d'une sonde ou bien par le calcul de cette température dans le calculateur de climatisation, on redémarre le moteur lorsque la température de l'évaporateur dépasse une valeur seuil.

On peut mettre cette condition en place sans condition de température extérieure ou bien, on peut la mettre en place à partir d'une certaine température extérieure. Dans ce cas, on redémarre le moteur lorsque la température extérieure dépasse une valeur seuil et que la quatrième condition est remplie.

On peut ajouter à ces stratégies une gestion spécifique de l'acoustique du pulseur de climatisation-chauffage. En effet, en cas de coupure du moteur, le bruit du pulseur n'est plus couvert par celui du moteur et un désagrément acoustique peut se développer. Dans ce cas, on baisse le régime de rotation de pulseur de climatisation-chauffage lorsque le moteur est coupé. On diminue ainsi l'inconfort acoustique dû à la ventilation mais on diminue également la vitesse d'air soufflé sur les passagers, ce qui est compensé par le ralentissement de la remontée des températures d'air soufflé. Autrement dit, la vitesse de l'air est diminuée mais l'air soufflé est plus froid.

On diminue la vitesse d'air soufflé sur les passagers, ce qui est, lorsque la température extérieure est comprise entre 20°C et 40°C (saison chaude), compensé par le ralentissement de la remontée des températures d'air soufflé, et de manière symétrique, lorsque la température extérieure est comprise entre -10°C et 20°C (en saison froide), ceci est compensé par le ralentissement de la baisse des températures d'air soufflé. Autrement dit, la vitesse d'air est diminuée mais l'air soufflé reste plus longtemps froid (condition entre 20°C et 40°C) ou plus longtemps chaud (condition entre -10°C à 20°C).

Dans le cas où le véhicule est équipé d'une pompe à eau électrique additionnelle sur le circuit de refroidissement, (ce qui peut être le cas indépendamment du stop&start : exemple confort grand froid, ou refroidissement des paliers d'un turbo), on la remet avantageusement en route lorsque le moteur est à l'arrêt afin de maintenir un débit d'eau dans l'aérotherme et ainsi maintenir plus longtemps la prestation chauffage en arrêt du moteur. On enrichit la première condition en continuant à mesurer la température d'eau moteur pendant le stop : on redémarre le moteur si cette température d'eau finit par devenir inférieure au seuil S1 (cette durée est largement supérieure à la durée d'un stop usuel).

Ces différentes conditions sont applicables intégralement à un véhicule équipé d'une climatisation automatique, qui, utilisant beaucoup de capteurs et de calculateurs, permet de connaître l'état de confort thermique et de visibilité dans le véhicule et donc de gérer au mieux le compromis entre arrêt et départ du moteur et confort thermique.

Si le véhicule est équipé d'une climatisation manuelle, le compromis entre les deux prestations dépend davantage du conducteur. Celui-ci peut donner la priorité à l'une des deux prestations à sa guise. Un bouton d'inhibition de l'arrêt et du départ du moteur lui permet de donner la priorité au confort thermique par rapport à l'arrêt et au départ du moteur. Si, lors d'un arrêt du moteur, le conducteur veut redémarrer le moteur, un appui sur cette commande lui permet de redémarrer le véhicule.

La première et la quatrième condition restent valables. L'absence de calculateur et des capteurs associés est palliée par des lois plus simples reposant uniquement sur la température extérieure et par les temporisations gérant le temps d'arrêt et le temps entre deux arrêts. On restreint l'occurrence des arrêts d'autant plus que la température extérieure augmente notamment, à partir de 25°C. La durée maximale d'un stop (ts) est réduite d'une minute environ quand la température ambiante est supérieure à 25°C pour devenir nulle pour une température ambiante de 35°C par exemple. La durée minimale d'interdiction de stop (ti) qui doit s'écouler en roulage avant de réautoriser un stop augmente avec la température extérieure (exemple : ti varie de 0 seconde à 25°C à 1 minute par 35°C, valeurs indicatives).

Par exemple au début d'un trajet, on limite l'occurrence des arrêts pour permettre l'atteinte plus rapide du confort de l'habitacle. Durant de cette phase de déchambrage, à défaut de disposer d'informations réelles sur l'état de l'habitacle, comme en climatisation régulée, l'algorithme de commande agit préventivement. Par exemple, au début du roulage on peut décaler artificiellement la température extérieure pour se placer volontairement dans une zone restreinte d'arrêt du moteur.

D'autres caractéristiques de l'invention apparaitront encore des figures annexées. Sur ces figures :
- la figure 1 est un diagramme du processus du procédé de l'invention ;
- la figure 2 est un graphe des temps de stops et des temps entre deux stops autorisés en climatisation manuelle.

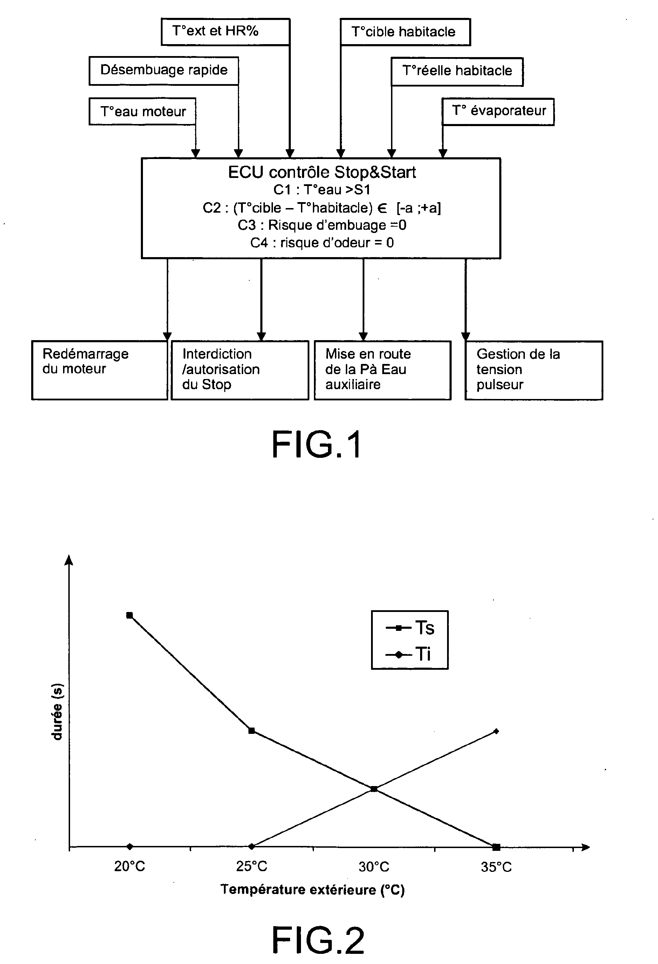

Sur la figure 2, Ti représente la durée minimale entre deux stops autorisés et Tₛ la durée maximale autorisée d'un stop. Comme on peut le constater la durée maximale autorisée d'un stop décroit sensiblement linéairement jusqu'à s'annuler pour une température de 35°C, tandis que la durée minimale entre deux stops est constante entre 20°C et 25°C puis augmente linéairement au-delà de 25°C.

## Revendications

1. Procédé de régulation du confort thermique pour un véhicule à arrêt et départ du moteur, dans lequel on définit des conditions principales relatives notamment à la température d'eau du moteur, à la température à l'intérieur de l'habitacle du véhicule, au risque d'embuage du pare-brise, au risque d'odeurs dans l'évaporateur du circuit de climatisation, et on limite le temps de coupure de moteur en fonction de ces conditions, et on redémarre le moteur aussitôt que l'écart entre la température dans l'habitacle et une température cible sort d'un intervalle [-a ;+a] **caractérisé en ce que** l'intervalle [-a ;+a] varie dynamiquement en fonction des conditions extérieures, l'intervalle étant élargi lors d'un démarrage du véhicule et resserré en conditions stabilisées.

2. Procédé selon la revendication 1, **caractérisé en ce que** d'une part on limite le temps de la coupure du moteur par un redémarrage du moteur et d'autre part on réduit l'occurrence des arrêts par une interdiction d'arrêt du moteur pendant le roulage.

3. Procédé selon la revendication 1, **caractérisé en ce que** l'écart de température dans l'habitacle du véhicule entre la température cible et la température mesurée est maintenu dans l'intervalle [-a ;+a] avec a compris entre 1°C et 5°C.

## Claims

1. Method for adjusting thermal comfort for a vehicle upon stopping and starting the engine, in which main conditions are defined that relate in particular to the engine water temperature, to the temperature inside the passenger compartment of the vehicle, to the risk of fogging of the windshield, to the risk of odors in the evaporator of the air conditioning circuit, and the engine off time is limited on the basis of these conditions, and the engine is restarted immediately the difference between the temperature in the passenger compartment and a target temperature departs from an interval [-a; +a], **characterized in that** the interval [-a; +a] varies dynamically according to the outside conditions, the interval being widened on starting the vehicle and tightened in stabilized conditions.

2. Method according to Claim 1, **characterized in that**, on the one hand, the engine off time is limited by restarting the engine and, on the other hand, the occurrence of the stops is reduced by a prohibition on stopping the engine while running.

3. Method according to Claim 1, **characterized in that** the temperature difference in the passenger compartment of the vehicle between the target temperature and the measured temperature is maintained within the interval [-a; +a] with a being between 1°C and 5°C.

## Patentansprüche

1. Verfahren zur Regelung des Wärmekomforts für ein Fahrzeug mit Stopp und Start des Motors, bei dem Hauptbedingungen bezüglich insbesondere der Wassertemperatur des Motors, der Temperatur im Fahrzeuginnenraum, der Gefahr des Beschlagens der Windschutzscheibe, der Gefahr von Gerüchen im Verdampfer der Klimaanlage definiert werden, und die Abschaltzeit des Motors in Abhängigkeit von diesen Bedingungen begrenzt wird, und der Motor wieder gestartet wird, sobald die Abweichung zwischen der Temperatur im Innenraum und einer Zieltemperatur einen Bereich [-a; +a] verlässt, **dadurch gekennzeichnet, dass** der Bereich [-a; +a] in Abhängigkeit von den Außenbedingungen dynamisch variiert, wobei der Bereich bei einem Anfahren des Fahrzeugs erweitert und unter stabilisierten Bedingungen wieder verkleinert wird.

2. Verfahren nach Anspruch 1, **dadurch gekennzeichnet, dass** einerseits die Zeit des Abschaltens des Motors durch ein Neustarten des Motors begrenzt wird, und andererseits das Auftreten der Stopps durch ein Stoppverbot des Motors während des Fahrens reduziert wird.

3. Verfahren nach Anspruch 1, **dadurch gekennzeichnet, dass** die Temperaturabweichung im Innenraum des Fahrzeugs zwischen der Zieltemperatur und der gemessenen Temperatur im Bereich [-a; +a] aufrechterhalten wird, wobei a zwischen 1°C und 5°C liegt.
